(19) Europäisches Patentamt
European Patent Office
Office européen des brevets

(11) EP 0 831 567 B1

(12) **EUROPEAN PATENT SPECIFICATION**

(45) Date of publication and mention
of the grant of the patent:
**14.02.2001 Bulletin 2001/07**

(51) Int Cl.$^7$: **H01S 3/06**, H01S 3/081

(21) Application number: **97914629.7**

(86) International application number:
**PCT/JP97/01195**

(22) Date of filing: **08.04.1997**

(87) International publication number:
**WO 97/38473 (16.10.1997 Gazette 1997/44)**

(54) **SLAB LASER OSCILLATOR**

PLATTENFÖRMIGER LASEROSZILLATOR

OSCILLATEUR DE LASER A PLAQUE

(84) Designated Contracting States:
**DE**

(30) Priority: **08.04.1996 JP 11055696**

(43) Date of publication of application:
**25.03.1998 Bulletin 1998/13**

(73) Proprietor: **FANUC LTD**
**Minamitsuru-gun, Yamanashi 401-05 (JP)**

(72) Inventors:
• **IEHISA, Nobuaki**
**Shizuoka 411 (JP)**
• **SATO, Masao**
**Room 14-308, Fanuc Manshonharimomi**
**Yamanashi 401-05 (JP)**

(74) Representative: **Billington, Lawrence Emlyn et al**
**Haseltine Lake & Co.**
**Imperial House**
**15-19 Kingsway**
**London WC2B 6UD (GB)**

(56) References cited:
**JP-A- 4 259 275**        **JP-A- 6 268 289**
**JP-A- 7 099 358**        **US-A- 3 798 571**

• **PATENT ABSTRACTS OF JAPAN vol. 015, no.**
**229 (E-1076), 11 June 1991 -& JP 03 066185 A**
**(TOSHIBA CORP), 20 March 1991**

**Description**

Technical Field

The present invention relates to a solid-state laser oscillating device for use in a laser beam machine or the like.

Background Art

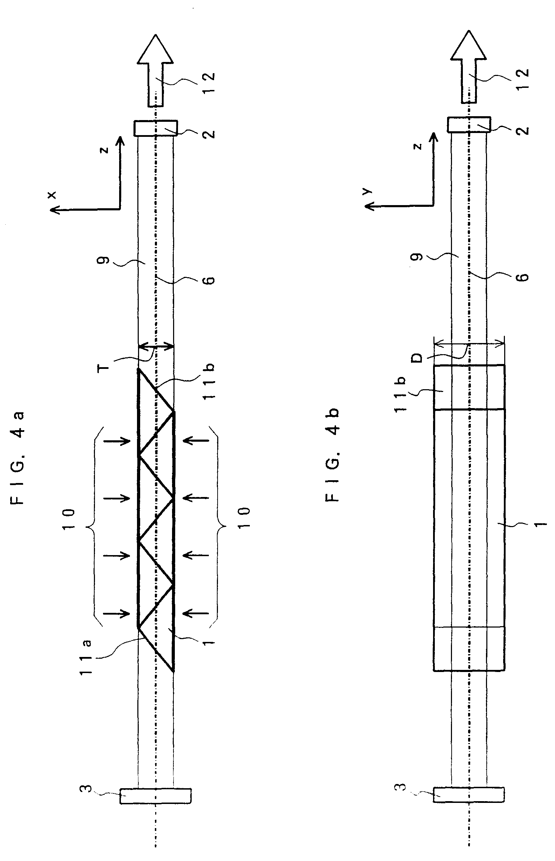

A Solid-state laser oscillating device such as YAG laser is capable of providing a high-output, stable laser beam, and thus is widely used in a laser beam machine for carrying out cutting, welding, etc. of metallic or nonmetallic materials, as well as in other types of machines. FIGS. 4a and 4b are sectional views of a conventional slab type solid-state laser oscillating device, taken in two directions perpendicular to each other.

A coordinate system is illustrated to indicate directions, wherein x, y and z axes indicate a thickness direction, a width direction and a longitudinal direction of a slab type laser medium, respectively. Accordingly, in FIGS. 4a and 4b, symbols T and D represent a thickness and a width of the slab type laser medium (laser crystal), respectively. It is to be noted that the "thickness direction" and the "width direction" are referred to for the sake of convenience, and when the thickness direction is referred to as an extending direction of one pair of opposite sides of a rectangular section of the slab type laser medium, which is perpendicular to a longitudinal axis thereof, the width direction will be referred to as a direction in which the other pair of opposite sides extends.

The slab type laser medium (e.g., YAG laser crystal) 1 having the thickness T and the width D is disposed in a reflector (not shown) having high-reflectivity inner surfaces, together with an excitation light source (not shown) such as a krypton lamp and a semiconductor laser. The slab type laser medium 1 is pumped by an excitation light falling thereon directly from the excitation light source or indirectly after being reflected by the reflector, as indicated by arrows 10 in FIG. 4a.

A partial reflection mirror 2 and a total reflection mirror 3 are arranged on opposite sides of the slab type laser medium 1, respectively, constituting a Fabry-Perot type optical resonator. In order to maintain a high efficiency of the optical resonator, opposite end faces 11a and 11b of the slab type laser medium 1 are obliquely cut at such an angle as to approximately satisfy the Brewster's condition with respect to the thickness direction (x-axis direction).

In the illustrated example, the partial reflection mirror 2, the slab type laser medium 1 and the total reflection mirror 3 are arranged in a straight line, and the reflection mirrors 2 and 3 are arranged in alignment with a central axis 6 of the slab type laser medium 1 so that their reflecting surfaces are faced opposite to each other. Although the partial and total reflection mirrors 2 and 3 are illustrated as plane mirrors, one or both of them may comprise a concave mirror (e.g., a concave spherical mirror).

A laser beam 9, which is generated by laser pumping the slab type laser medium 1 by means of the excitation light 10, is amplified inside the laser medium 1 while traveling back and forth between the reflection mirrors 2 and 3, and a part thereof is let out as a laser beam output 12. The laser output 12 from the partial reflection mirror 2 is used for the purpose of laser beam machining or the like.

An enormous amount of heat is generated in the pumped slab type laser medium 1, and it is therefore necessary to remove the generated heat. This applies also to the case where a cylindrical rod type laser crystal having a circular cross section is used as the laser medium. To remove the heat generated in the laser medium, generally employed is a method wherein a cooling medium (pure water) is circulated to come into contact with the surface of the slab type laser medium 1 (or the rod type laser medium).

There arises a problem that a temperature gradient occurs inside the laser medium from a surface region to a central region thereof. The temperature gradient entails a refractive index gradient. Such a refractive index gradient is a cause of reduction in quality of the laser beam. This is because an uniformity of lengths of optical paths (taking the refractive index into account) of lights traveling back and forth between the partial and total reflection mirrors 2 and 3 in passing the laser medium become lower. Namely, an optical path length of a light which passes a long distance in the vicinity of the surface where the temperature is relatively low (low refractive index) differs from that of a light which passes a long distance in the vicinity of the central axis 6 where the temperature is relatively high (high refractive index), so that the effective resonator length becomes nonuniform.

As a result, an uniformity of phase of the light present in the resonator lowers and thus a divergent laser beam is output. Such a laser beam is difficult to converge into a sufficiently narrow beam with high energy density using an optical converging system, and is generally considered a low-quality laser beam.

When a cylindrical rod type laser crystal having a circular cross section is used as the laser medium, the refractive index is the highest near the central axis and lowers with distance from the central axis toward the peripheral region, thus forming a nearly concentric refractive index profile. Consequently, a light beam passed through a rod type laser crystal having a circular cross section has variation in phase and thus is divergent.

To the contrary, in the case where a slab type laser crystal is used as the laser medium, the above problem can be settled to some extent. Namely, by making the laser beam repeatedly subjected to total reflections inside the slab type laser medium 1 so as to form a zigzag optical path, as shown in FIG. 4a, the laser beam passes evenly through the high-refractive index region (near the central axis 6) and low-refractive index region (near the surface) of the slab type laser medium 1, so that a large difference of the optical path lengths is difficult to occur.

In the case where the opposite end faces 11a and 11b of the slab type laser medium 1 are inclined, the optical path in the laser medium 1 can be made zigzag even if the angle of inclination of the end faces does not fulfill the Brewster's condition, to make the optical path lengths uniform. Also, even in the case where the opposite end faces 11a and 11b of the slab type laser medium 1 are not inclined, the laser beam can be repeatedly subjected to total reflections to form a zigzag optical path in the laser medium 1 to improve the quality of the laser beam, by arranging the partial and total reflection mirrors 2 and 3 so that the laser beam is obliquely incident on and emitted from each of the end faces 11a and 11b.

This is a reason why the slab type laser medium is employed in a high-output solid-state laser oscillating device. However, as seen from the laser beam 9 shown in FIG. 4b, the optical path in the slab type laser medium 1 can be made zigzag only in one direction (in this example, the x-axis direction, i.e., the thickness direction), and it is impossible to make the optical path zigzag in the width direction (y-axis direction) perpendicular to the above one direction at the same time.

Naturally, the refractive index gradient causes in the slab type laser medium 1 not only in the thickness direction but also in the width direction, and therefore, an improvement of quality of the laser beam by the above method of zigzagging the optical path can be expected only in the thickness direction (or the width direction). Accordingly, in a conventional laser oscillating device using the slab type laser medium, a converging capability (the extent to which the beam can be focused) of the output laser beam would be sufficient in one direction (x- or y-axis direction) but insufficient in a direction (y- or x-axis direction) perpendicular to the above one direction.

To solve the problem, the method can be employed in which a slab type laser medium 1 having a sufficiently large width D with respect to the thickness T is used and only a central portion in the width direction where the refractive index gradient is relatively small is used for the laser oscillation. This method is, however, associated with a problem that a portion of the laser medium which can be utilized in laser amplification is small in comparison with its size, i.e., a relatively large laser crystal is required for the same laser output.

An object of the present invention is to provide a slab type laser oscillating device capable of outputting a laser beam having an enhanced quality in a width direction. Particularly, the object of the invention is to provide a slab type laser oscillating device capable of outputting a laser beam having an enhanced quality in a width direction, without increasing a portion of a laser medium which is not used for laser amplification.

A solid-state laser oscillator of the present invention comprises a slab type laser medium in the form of, for example, an Nd-doped YAG laser crystal, etc. which is arranged in an optical resonator and subjected to laser pumping to obtain a laser output. An obliquely bent optical path is formed in the optical resonator so as to lower an undesirable influence of a gradient of refractive index caused in the slab type laser medium.

According to the present invention, the optical resonator comprises a bending mirror disposed close to one end face of the slab type laser medium in a longitudinal direction thereof, and partial and total reflection mirrors obliquely disposed adjacent to each other and close to the other end face of the slab type laser medium. The bending mirror, the partial reflection mirror and the total reflection mirror are arranged so that an optical path is obliquely formed between the partial and total reflection mirrors via the bending mirror with a longitudinal axis of the slab type laser medium situated therebetween, in a first section along an extending direction of a pair of opposite sides of a rectangular section perpendicular to the longitudinal axis. A laser beam is let out of the optical resonator through the partial reflection mirror.

Preferably, the slab type laser medium is arranged in the optical resonator so that at least a 50% part of the slab type laser medium is occupied by the obliquely bent optical path formed in the optical resonator. In the case where a spherical mirror is used for the bending mirror and plane mirrors are used for the partial and total reflection mirrors, the above condition is expressed as $u + s \leq (L + h)/2$, , where s is a length of the slab type laser medium in the longitudinal direction, u is a distance between a center of a reflecting surface of the spherical mirror and the closer one of the end faces of the slab type laser medium, L is a radius of curvature of the reflecting surface of the spherical mirror, and h is a length of an overlapping region in which a beam path between the partial reflection mirror and the bending mirror overlaps with a beam path between the total reflection mirror and the bending mirror in the longitudinal direction of the slab type laser medium.

In a second section perpendicular to the first section, the laser beam preferably repeatedly undergoes total reflection to form a zigzag optical path. It is preferable that the opposite end faces of the slab type laser medium are inclined at an angle approximately satisfying the Brewster's condition in the second section.

Brief Description of Drawings

FIGS. 1a and 1b are sectional views of a slab type solid-state laser oscillating device according to an embodiment of the present invention, taken in two directions perpendicular to each other, respectively; FIG. 2 is a diagram showing an inappropriate arrangement of a bending mirror, a partial reflection mirror and a total reflection mirror relative to a slab type laser medium;

FIG. 3 is a diagram showing an arrangement of the bending mirror, the partial reflection mirror and the total reflection mirror relative to the slab type laser medium under a condition that a light beam is allowed to pass at least 50% of the laser medium; and

FIGS. 4a and 4b are sectional views of a conventional solid-state laser oscillating device using a slab type laser medium, taken in two directions perpendicular to each other, respectively.

Best Mode of Carrying out the Invention

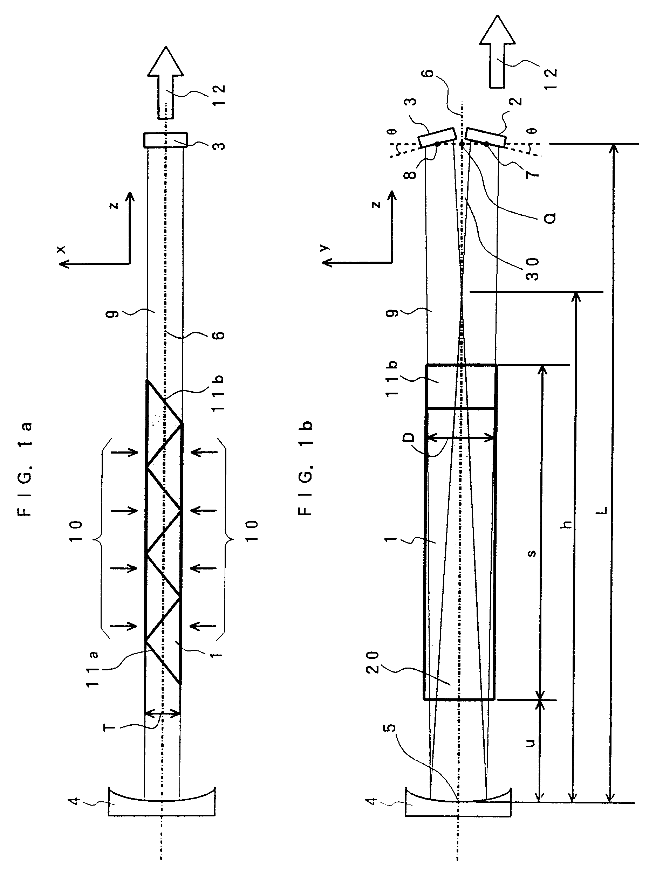

FIGS. 1a and 1b show a structure of a principal part of a slab type laser oscillating device according to the present invention. FIG. 1a is a sectional view taken along a thickness direction of the slab type laser medium, and FIG. 1b is a sectional view taken along a width direction of the laser medium. A coordinate system is described in the sectional views in order to indicate the thickness direction (x-axis direction), width direction (y-axis direction) and longitudinal direction (z-axis direction) of the slab type laser medium, in the same manner as FIGS. 4a and 4b.

A slab type laser medium 1 used in this embodiment is disposed in a reflector (not shown) having high-reflectivity inner surfaces, together with an excitation light source (not shown) such as a xenon lamp and a semiconductor laser, as in conventional devices. As the slab type laser medium 1, a YAG laser crystal doped with Nd ions is preferably used. The YAG laser crystal 1 may have the size: length s = 206 mm; thickness T = 6 mm; and width D = 25 mm, for example.

The slab type laser medium 1 has opposite end faces 11a and 11b obliquely cut at such an angle as to approximately satisfy the Brewster's condition with respect to the thickness direction (x-axis direction). As indicated by arrows 10 in FIG. 1a, the slab type laser medium 1 is subjected to laser pumping by a direct light from the excitation light source or an indirect light reflected by the reflector. Like conventional solid-state laser oscillating devices, the slab type laser medium 1 is disposed in an optical resonator using a plurality of reflecting mirrors (total reflection mirror and partial reflection mirror) to constitute a laser resonator. However, as especially shown in FIG. 1a, the device of the present invention differs from the conventional devices in a structure of the optical resonator.

Specifically, a Fabry-Perot type optical resonator is constituted by arranging a bending mirror 4 at a location close to one end face 11a of the slab type laser medium 1 in the longitudinal direction thereof, and obliquely arranging a partial reflection mirror 2 and a total reflection mirror 3 side by side at locations close to the other end face 11b, so that an optical path is formed between the partial mirror 2 and the total reflection mirror 3 through the bending mirror 4. In this embodiment, plane mirrors are used as the partial and total reflection mirrors 2 and 3 while a spherical mirror is used as the bending mirror 4.

In order to form such a bent optical path between the partial reflection mirror (partial reflection plane mirror) 2 and the total reflection mirror (total reflection plane mirror) 3, using the spherical mirror 4 as the bending mirror, the individual mirrors are arranged so as to fulfill the following conditions.

I) The positions of the mirrors 2, 3 and 4 in the thickness direction (x-axis direction) are held at an identical level. Thus, when viewed in a section taken along the thickness direction, an optical path shown in FIG. 1a is formed. Namely, inside the slab type laser medium 1, a zigzag optical path repeating the total reflection is formed in the thickness direction (x-axis direction), and outside the slab type laser medium 1, a optical path not zigzagging in the thickness direction (x-axis direction) but extending along the longitudinal direction (z-axis direction) is formed.

II) An intersecting point of a straight line, which connects a center 7 of the reflecting surface of the partial reflection mirror 2 with a center 8 of the reflecting surface of the total reflection mirror 3, and a central axis 6 of the slab type laser medium 1 coincides with a center Q of curvature of the reflecting surface of the spherical mirror 4.

III) The angle $\theta$ of inclination of the individual mirrors 2 and 3 is set to a value such that a perpendicular line to the reflecting surface of the partial reflection mirror 2 at the center 7 and a perpendicular line to the reflecting surface of the total reflection mirror 3 at the center 8 intersect at a center 5 of the reflecting surface of the spherical mirror 4.

It is to be noted, however, that the combination of the positions of the partial and total reflection mirrors 2 and 3, and the inclination angle $\theta$ matching therewith can be selected in design. Namely, as seen from FIG. 1b, when forming the optical path going and returning between the partial and total reflection mirrors 2 and 3 obliquely arranged side by side, and bending at the bending mirror 4, a V-shaped parting is formed between going and returning paths (i.e. the path between the partial reflection mirror 2 and the spherical mirror 4 and the path between the total reflection mirror 3 and the spherical mirror 4). In general, the larger the inclination angle $\theta$ is set, the wider the parting becomes.

As the going and returning paths have such a parting, a triangular overlapping region 20 where the going and returning paths overlap with each other is formed at a location close to the spherical mirror (bending mirror) 4, while a triangular blank region 30 is formed at a location remote from the spherical mirror 4. Generally, the larger the inclination angle θ is set, the shorter the length h of the overlapping region 20 becomes, and the larger the length L-h of the blank region 30 becomes (where L is a radius of curvature of the spherical mirror 4). In order to achieve high-efficiency laser oscillation using the slab type laser medium 1, it is preferable, although not essential, that a major part of the slab type laser medium 1 is situated in the overlapping region 20.

Accordingly, in this embodiment, the slab type laser medium 1 is placed so that its overall length s is situated within the length h of the overlapping region 20. Also, as shown in FIG. 1b, the individual elements are arranged so that a light beam traveling back and forth within the resonator passes through the slab type laser medium 1 obliquely in a section along the width direction substantially over the entire width D of the laser medium 1. For example, when adjusting the positions of the partial and total reflection mirrors 2 and 3, the inclination angle θ, the position of the laser crystal 1, etc. so as to satisfy the above conditions using an Nd-doped YAG laser crystal having a length s = 206 mm, a thickness T = 6 mm and a width D = 25 mm, the following values were obtained: L = 800 mm, u = 200 mm, and h = 505 mm.

With the above arrangement, an average laser output of 1 kW at maximum was obtained in continuous or pulsed oscillation by pumping the slab type laser medium 1 using a krypton lamp. As an index representing beam quality of the output beam emitted from the partial reflection mirror 2, a product of a beam waist and a total divergence angle of the beam was found to be 80 mm·mrad in the width direction of the slab type laser medium 1. For the purpose of comparison, the above index with respect to a conventional device using an identical slab type laser medium 1 was obtained as 510 mm·mrad.

Thus, it was confirmed that the beam quality in the width direction of the slab type laser medium 1 is greatly improved.

The beam quality in the width direction is improved with the aforementioned arrangement because the laser beam 9 traveling back and forth between the partial and total reflection mirrors 2 and 3 obliquely passes through the laser medium 1 in any section taken along the width direction. Namely, there is no beam passing only a region of the relatively high refractive index in the slab type laser medium 1, nor any beam passing only a region of the relatively low refractive index in the laser medium 1.

As a result, a phase deviation of the laser beam 9 caused in passing the slab type laser medium 1 lessens as a whole, and the laser beam 12 outputted from the partial reflection mirror 2 becomes non-divergent. In other words, an undesirable affection of temperature gradient which occurs inside the slab type laser medium 1 by cooling is prevented to improve the quality of the laser beam in the width direction (in general expression, in the direction of a pair of opposite sides of the rectangular section).

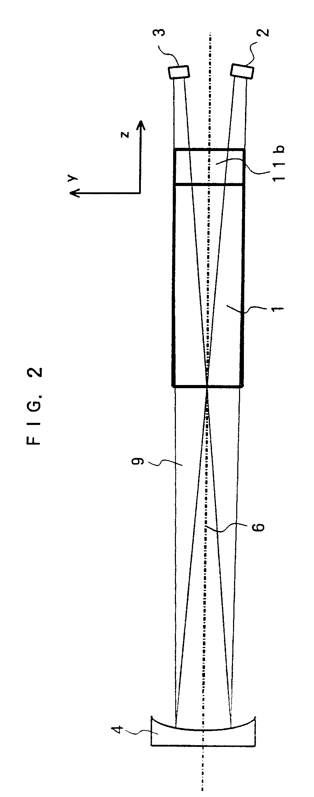

In the embodiment shown in FIGS. 1a and 1b, the slab type laser medium 1 is positioned so that the overall length s is situated within the length h of the overlapping region 20. In practice, however, the position of the slab type laser medium 1 may be shifted in some extent toward the partial reflection mirror 2 or the total reflection mirror 3. Nevertheless, as shown in FIG. 2, an arrangement that the slab type laser medium 1 is entirely outside the overlapping region 20 may be inappropriate if the following condition is not met.

A condition for allowing the light beam 9 to pass at least 50% of the slab type laser medium 1 will be derived on a computational basis with respect to a case where a plane mirror is used for the partial and total reflection mirrors 2 and 3, and a spherical mirror with a reflecting surface having a radius of curvature of L is used for the bending mirror 4.

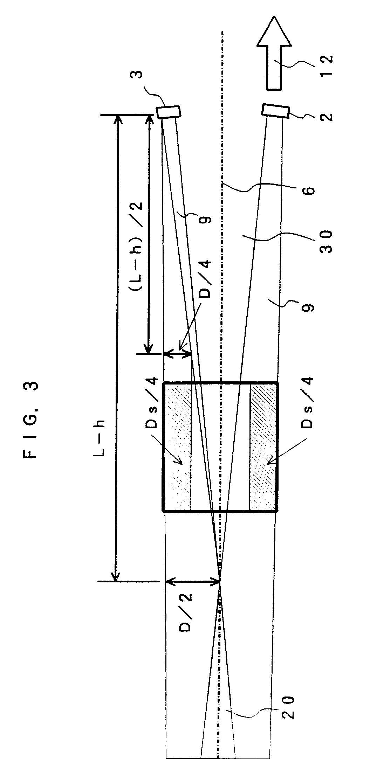

FIG. 3 illustrates the arrangement of the bending mirror and the partial and total reflection mirrors satisfying the above condition, where the two hatched rectangles are obtained by cutting off outside portions of the rectangles each having a width of D/4 (D is the length of the slab type laser medium 1 in the width direction) from rectangles which are symmetrical with respect to the axis 6 of the slab type laser medium 1 and having a width of D/2 and a length of s (s is the length of the laser medium 1 in the longitudinal direction). The aforementioned condition (beam passage of 50%) can be regarded as being satisfied if the two hatched rectangles are within the light beam 9. To this end, the relationship indicated by the following expression (1) needs to be fulfilled.

$$u + s \leq (L + h)/2 \qquad (1)$$

The individual symbols, as explained with reference to FIG. 1b, represent as follows: s is a length of the slab type laser medium 1 in the longitudinal direction, u is a distance between the center 5 of the reflecting surface of the spherical mirror 4 and the end face 11b of the slab type laser medium 1, L is a radius of curvature of the reflecting surface of the spherical mirror 4, and h is a length of the overlapping region 20.

The above condition indicated by the expression (1) may be regarded as a criterion for permitting a solid-state laser oscillating device under the technical concept of the present invention to operate with a desirable efficiency. Substituting the specific values used in the embodiment, i.e., s = 206 mm, L = 800 mm, u = 200 mm and h = 505 mm, into the expression (1), it is found that the values of left and right sides of the expression (1) are 406 mm and 682.5 mm, respectively, to prove that the relationship of the expression (1) is adequately satisfied.

The foregoing description is made with respect to the case where plane mirrors are used for the partial and total reflection mirrors 2 and 3, and a spherical mirror is used for the bending mirror 4. It is obvious, however, that an obliquely bent optical path can be formed according to the principle of the present invention by using a concave mirror other than the spherical mirror as the bending mirror 4. Needless to say, a spherical mirror having a large radius of curvature can also be used for the partial mirror 2 or the total reflection mirror 3, provided that the use of such mirrors does not make it impossible to form an obliquely bent optical path.

According to the present invention, a resonator structure for forming an optical path extending between partial and total reflection mirrors via a bending mirror is incorporated in a solid-state laser oscillating device using a slab-type laser medium. This makes it possible to output a laser beam having a high quality in one of two directions along the sides of a rectangular section of the slab type laser medium. Also, by combining this technique with the technique of forming a zigzag optical path, it is possible to output a laser beam having a high quality in both directions of the rectangular section of the slab type laser medium.

## Claims

1.  A slab type solid-state laser oscillating device comprising:

    a slab type laser medium (1) for generating a laser beam by laser pumping; and
    an optical resonator for resonating the laser beam generated by said slab type laser medium, said optical resonator having a bending mirror (4) disposed close to one end face (11a) of said slab type laser medium in a longitudinal direction thereof, and partial (2) and total (3) reflection mirrors obliquely disposed adjacent to each other and close to the other end face (11b) of said slab type laser medium,
    said bending mirror, said partial reflection mirror and said total reflection mirror being arranged so that an optical path is obliquely formed between said partial and total reflection mirrors via said bending mirror with a longitudinal axis (6) of said slab type laser medium situated therebetween, in a first section along an extending direction of a pair of opposite sides of a rectangular section perpendicular to said longitudinal axis, to let a laser beam out of said optical resonator through said partial reflection mirror.

2.  A slab type solid-state laser oscillating device according to claim 1, wherein said laser beam repeatedly undergoes total reflections in said slab type laser medium, and said optical path zigzags in a second section perpendicular to said first section.

3.  A slab type solid-state laser oscillating device according to claim 1 or 2, wherein said one end face and the other end face of said slab type laser medium are inclined at an angle approximately satisfying Brewster's condition in said second section.

4.  A slab type solid-state laser oscillating device comprising:

    a slab type laser medium (1) for generating a laser beam by laser pumping; and
    an optical resonator for resonating the laser beam generated by said slab type laser medium, said optical resonator having a bending mirror (4) disposed close to one end face (11a) of said slab type laser medium in a longitudinal direction thereof, and partial (2) and total (3) reflection mirrors obliquely disposed adjacent to each other and close to another end face (11b) of said slab type laser medium,
    said bending mirror, said partial reflection mirror and said total reflection mirror being arranged so that an optical path is obliquely formed between said partial and total reflection mirrors via said bending mirror with a longitudinal axis (6) of said slab type laser medium situated therebetween, in a first section along an extension direction of a pair of opposite sides of a rectangular section perpendicular to said longitudinal axis, and that said optical path formed in said optical resonator occupies at least a 50% part of said slab type laser medium, to let a laser beam out of said optical resonator through said partial reflection mirror.

5.  A slab type solid-state laser oscillating device according to claim 4, wherein said laser beam repeatedly undergoes total reflections in said slab type laser medium, and said optical path zigzags in a second section perpendicular to said first section.

6.  A slab type solid-state laser oscillating device according to claim 4 or 5, wherein said one end face and the other end face of said slab type laser medium are inclined at an angle approximately satisfying Brewster's condition in said second section.

7.  A slab type solid-state laser oscillating device comprising:

    a slab type laser medium (1) for generating a laser beam by means of laser pumping; and
    an optical resonator for resonating the laser beam generated by said slab type laser medium, said optical resonator having a bending mirror (4) disposed close to one end face (11a) of said slab type laser medium in a longitudinal direction thereof, and partial (2) and total (3) reflection mirrors obliquely disposed adjacent to each other and close to the other end face of said slab type laser medium, said bending mirror, said partial reflection mirror and said total reflection mirror being arranged so that an optical path is obliquely formed between said partial and total reflection mirrors via said bending mirror with a longitudinal axis (6) of said slab type laser medium situated therebetween, in a first section along an extension direction of a pair of opposite sides of a rectangular section perpendicular to said longitudinal axis, to let a laser beam out of said optical resonator through said partial reflection mirror, and a condition indicated by an expression below being fulfilled,

$$u + s \leq (L + h)/2 \qquad [1]$$

where s: length of said slab type laser medium in the longitudinal direction; u: distance between a center of a reflecting surface of a spherical mirror and a closer one of the end faces of said slab type laser medium; L: radius of curvature of the reflecting surface of the spherical mirror; h: length of an overlapping region in the longitudinal direction of said slab type laser medium, the overlapping region being a region where a beam path between said partial reflection mirror and said bending mirror overlaps with a beam path between said total reflection mirror and said bending mirror.

8. A slab type solid-state laser oscillating device according to claim 7, wherein said laser beam repeatedly undergoes total reflections in said slab type laser medium, and said optical path zigzags in a second section perpendicular to said first section.

9. A slab type solid-state laser oscillating device according to claim 7 or 8, wherein said one end face and the other end face of said slab type laser medium are inclined at an angle approximately satisfying Brewster's condition in said second section.

10. A slab type solid-state laser oscillating device according to any one of claims 1 through 9, wherein said slab type laser medium comprises a YAG laser crystal doped with Nd.

**Patentansprüche**

1. Plattenförmiger Festkörper-Laseroszillator, der umfasst:

ein plattenförmiges Lasermedium (1) zum Erzeugen eines Laserstrahls durch Laserpumpen und

einen optischen Resonator zum in Resonanz Schwingenlassen des Laserstrahls, der durch das plattenförmige Lasermedium erzeugt wird, wobei der optische Resonator einen Beugungsspiegel (4), der nahe einer Endfläche (11a) des plattenförmigen Lasermediums in einer Längsrichtung desselben angeordnet ist, einen Teilreflexionsspiegel (2) und einen Totalreflexionsspiegel (3) hat, die schräg einander benachbart und nahe der anderen Endfläche (11b) des plattenförmigen Lasermediums angeordnet sind,

wobei der Beugungsspiegel, der Teilreflexionsspiegel und der Totalreflexionsspiegel derart angeordnet sind, dass schräg zwischen den Teil- und Totalreflexionsspiegeln über den Beugungsspiegel in einem ersten Gebiet längs einer Ausdehnungsrichtung eines Paares von einander gegenüberliegenden Seiten eines rechteckigen Gebiets senkrecht zu der Längsachse, wobei sich dazwischen eine Längsachse (6) des plattenförmigen Lasermediums befindet, ein optischer Weg gebildet wird, um einen Laserstrahl aus dem optischen Resonator durch den Teilreflexionsspiegel auszusenden.

2. Plattenförmiger Festkörper-Laseroszillator nach Anspruch 1, bei dem der Laserstrahl wiederholt Totalreflexionen in dem plattenförmigen Lasermedium unterzogen wird und der optische Weg zickzackartig in einem zweiten Gebiet senkrecht zu dem ersten Gebiet verläuft.

3. Plattenförmiger Festkörper-Laseroszillator nach Anspruch 1 oder 2, bei dem die eine Endfläche und die andere Endfläche des plattenförmigen Lasermedium unter einem Winkel geneigt sind, der angenähert die Brewstersche Bedingung in dem zweiten Gebiet erfüllt.

4. Plattenförmiger Festkörper-Laseroszillator, der umfasst:

ein plattenförmiges Lasermedium (1) zum Erzeugen eines Laserstrahls durch Laserpumpen und

einen optischen Resonator zum in Resonanz Schwingenlassen des Laserstrahls, der durch das plattenförmige Lasermedium erzeugt wird, wobei der optische Resonator einen Beugungsspiegel (4), der nahe einer Endfläche (11a) des plattenförmigen Lasermediums in einer Längsrichtung desselben angeordnet ist, einen Teilreflexionsspiegel (22) und einen Totalreflexionsspiegel (32) hat, die schräg einander benachbart und nahe der anderen Endfläche (11b) des plattenförmigen Lasermediums angeordnet sind,

wobei der Beugungsspiegel, der Teilreflexionsspiegel und der Totalreflexionsspiegel derart angeordnet sind, dass schräg zwischen den Teil- und Totalreflexionsspiegeln über den Beugungsspiegel in einem ersten Gebiet längs einer Ausdehnungsrichtung eines Paares von einander gegenüberliegenden Seiten eines rechteckigen Gebiets senkrecht zu der Längsachse, wobei sich dazwischen eine Längsachse (6) des plattenförmigen Lasermediums befindet, ein optischer Weg gebildet wird und dass der optische Weg, der in dem optischen Resonator gebildet wird, zumindest einen 50%-Teil des plattenförmigen Lasermediums einnimmt, um einen Laserstrahl aus dem optischen Resonator durch den Teilreflexionsspiegel auszusenden.

5. Plattenförmiger Festkörper-Laseroszillator nach Anspruch 4, bei dem der Laserstrahl wiederholt Totalreflexionen in dem plattenförmigen Lasermedium unterzogen wird und der optische Weg zickzackartig in einem zweiten Gebiet senkrecht zu dem ersten Gebiet verläuft.

6. Plattenförmiger Festkörper-Laseroszillator nach Anspruch 4 oder 5, bei dem die eine Endfläche und die andere Endfläche des plattenförmigen Lasermedium unter einem Winkel geneigt sind, der angenähert die Brewstersche Bedingung in dem zweiten Gebiet erfüllt.

7. Plattenförmiger Festkörper-Laseroszillator, der umfasst:

ein plattenförmige Lasermedium (1) zum Erzeugen eines Laserstrahl mittels Laserpumpen und
einen optischen Resonator zum in Resonanz Schwingenlassen des Laserstrahls, der durch das plattenförmige Lasermedium erzeugt wird, wobei der optische Resonator einen Beugungsspiegel (4), der nahe einer Endfläche (11a) des plattenförmigen Lasermediums in einer Längsrichtung desselben angeordnet ist, einen Teilreflexionsspiegel (2) und einen Totalreflexionsspiegel (3) hat, die schräg einander benachbart und nahe der anderen Endfläche des plattenförmigen Lasermediums angeordnet sind,

wobei der Beugungsspiegel, der Teilreflexionsspiegel und der Totalreflexionsspiegel derart angeordnet sind, dass schräg zwischen den Teil- und Totalreflexionsspiegeln über den Beugungsspiegel in einem ersten Gebiet längs einer Ausdehnungsrichtung eines Paares von einander gegenüberliegenden Seiten eines rechteckigen Gebiets senkrecht zu der Längsachse, wobei sich dazwischen eine Längsachse (6) des plattenförmigen Lasermediums befindet, ein optischer Weg gebildet wird, um einen Laserstrahl aus dem optischen Resonator durch den Teilreflexionsspiegel auszusenden, und eine Bedingung, die durch den Ausdruck

$$u + s \leq (L + h)/2 \qquad (1)$$

gegeben ist, erfüllt wird, wobei s die Länge des plattenförmigen Lasermediums in der Längsrichtung ist, U der Abstand zwischen einem Zentrum einer reflektierenden Oberfläche eines sphärischen Spiegels und einer näheren der Endflächen des plattenförmigen Lasermediums ist, L der Radius der Krümmung der reflektierenden Oberfläche des sphärischen Spiegels ist und h die Länge eines Überlappungsbereichs in der Längsrichtung des plattenförmigen Lasermediums ist, wobei der Überlappungsbereich ein Bereich ist, in dem sich ein Strahlweg zwischen dem Teilreflexionsspiegel und dem Beugungsspiegel mit einem Strahlweg zwischen dem Totalreflexionsspiegel und dem Beugungsspiegel überlappt.

8. Plattenförmiger Festkörper-Laseroszillator nach Anspruch 7, bei dem der Laserstrahl wiederholt Totalreflexionen in dem plattenförmigen Lasermedium unterzogen wird und der optische Weg in einem zweiten Gebiet senkrecht zu dem ersten Gebiet zickzackartig verläuft.

9. Plattenförmiger Festkörper-Laseroszillator nach Anspruch 7 oder 8, bei dem die eine Endfläche und die andere Endfläche des plattenförmigen Lasermediums unter einem Winkel geneigt sind, der angenähert die Brewstersche Bedingung in dem zweiten Gebiet erfüllt.

10. Plattenförmiger Festkörper-Laseroszillator nach einem der Ansprüche 1 bis 9, wobei das plattenförmige Lasermedium aus einem YAG- (Yttrium-Aluminium-Granat-)Laserkristall besteht, der mit Nd angereichert ist.

## Revendications

1. Un dispositif oscillant de laser semi-conducteur du type à plaque comprenant :

un milieu laser du type à plaque (1) pour produire un faisceau laser par pompage laser ; et

un résonateur optique pour faire résonner le faisceau laser produit par ledit milieu laser du type à plaque, ledit résonateur optique présentant un miroir réfléchissant (4) disposé près d'une première face d'extrémité (11a) dudit milieu laser du type à plaque dans une direction longitudinale de ce dernier, et des miroirs à réflexion partielle (2) et totale (3) disposés obliquement de manière adjacente l'un à l'autre et près de l'autre face d'extrémité (11b) dudit milieu laser du type à plaque,

ledit miroir réfléchissant, ledit miroir à réflexion partielle et ledit miroir à réflexion totale étant disposés de telle manière qu'un trajet optique soit formé obliquement entre lesdits miroirs à réflexion partielle et totale par l'intermédiaire dudit miroir réfléchissant avec un axe longitudinal (6) dudit milieu laser du type à plaque situé entre eux, dans une première section le long d'une direction d'extension d'une paire de côtés opposés d'une section rectangulaire perpendiculaire audit axe longitudinal, pour laisser un faisceau laser sortir dudit résonateur optique à travers ledit miroir à réflexion partielle.

**2.** Un dispositif oscillant de laser semi-conducteur du type à plaque selon la revendication 1, dans lequel ledit faisceau laser subit de manière répétée des réflexions totales dans ledit milieu laser du type à plaque, et dans lequel ledit trajet optique effectue un parcours en zigzag dans une seconde section perpendiculaire à ladite première section.

**3.** Un dispositif oscillant de laser semi-conducteur du type à plaque selon la revendication 1 ou 2, dans lequel ladite première face d'extrémité et l'autre face d'extrémité dudit milieu laser du type à plaque sont inclinées selon un angle satisfaisant approximativement la condition de Brewster dans ladite seconde section.

**4.** Un dispositif oscillant de laser semi-conducteur du type à plaque comprenant :

un milieu laser du type à plaque (1) pour produire un faisceau laser par pompage laser ; et

un résonateur optique pour faire résonner le faisceau laser produit par ledit milieu laser du type à plaque, ledit résonateur optique présentant un miroir réfléchissant (4) disposé près d'une première face d'extrémité (11a) dudit milieu laser du type à plaque dans une direction longitudinale de ce dernier, et des miroirs à réflexion partielle (2) et totale (3) disposés obliquement de manière adjacente l'un à l'autre et près d'une autre face d'extrémité (11b) dudit milieu laser du type à plaque,

ledit miroir réfléchissant, ledit miroir à réflexion partielle et ledit miroir à réflexion totale étant disposés de telle manière qu'un trajet optique soit formé obliquement entre lesdits miroir à réflexion partielle et totale par l'intermédiaire dudit miroir réfléchissant avec un axe longitudinal (6) dudit milieu laser du type à plaque situé entre eux, dans une première section le long d'une direction d'extension d'une paire de côtés opposés d'une section rectangulaire perpendiculaire audit axe longitudinal, et en ce que ledit trajet optique formé dans ledit résonateur optique occupe au moins une partie de 50% dudit milieu laser du type à plaque, pour laisser un faisceau laser sortir dudit résonateur optique à travers ledit miroir à réflexion partielle.

**5.** Un dispositif oscillant de laser semi-conducteur du type à plaque selon la revendication 4, dans lequel ledit faisceau laser subit de manière répétée des réflexions totales dans ledit milieu laser du type à plaque, et dans lequel ledit trajet optique effectue un parcours en zigzag dans une seconde section perpendiculaire à ladite première section.

**6.** Un dispositif oscillant de laser semi-conducteur du type à plaque selon la revendication 4 ou 5, dans lequel ladite première face d'extrémité et l'autre face d'extrémité dudit milieu laser du type à plaque sont inclinées d'un angle satisfaisant approximativement la condition de Brewster dans ladite seconde section.

**7.** Un dispositif laser oscillant semi-conducteur du type à plaque comprenant :

un milieu laser du type à plaque (1) pour produire un faisceau laser au moyen d'un pompage laser ; et

un résonateur optique pour faire résonner le faisceau laser produit par ledit milieu laser du type à plaque, ledit résonateur optique présentant un miroir réfléchissant (4) disposé près d'une première face d'extrémité (11a) dudit milieu laser du type à plaque dans une direction longitudinale de ce dernier, et des miroirs à réflexion partielle (2) et totale (3) disposés obliquement de manière adjacente l'un à l'autre et près de l'autre face d'extrémité dudit milieu laser du type à plaque,

ledit miroir réfléchissant, ledit miroir à réflexion partielle et ledit miroir à réflexion totale étant disposés de telle manière qu'un trajet optique soit formé obliquement entre lesdits miroirs à réflexion partielle et totale par l'intermédiaire dudit miroir réfléchissant avec un axe longitudinal (6) dudit milieu laser du type à plaque situé entre eux, dans une première section le long d'une direction d'extension d'une paire de côtés opposés d'une section rectangulaire perpendiculaire audit axe longitudinal, pour laisser un faisceau laser sortir dudit résonateur optique à travers ledit miroir à réflexion partielle, une condition indiquée par une expression ci-dessous étant remplie :

$$u + s \leq (L + h)/2 \qquad [1]$$

où s : longueur dudit milieu laser du type à plaque dans la direction longitudinale ; u : distance entre un centre d'une surface réfléchissante d'un miroir sphérique et une plus proche des faces d'extrémité dudit milieu laser du type à plaque ; L : rayon de courbure de la surface réfléchissante du miroir sphérique ; h : longueur d'une zone de recouvrement dans la direction longitudinale dudit milieu laser du type à plaque, la zone de recouvrement étant une zone où un trajet de faisceau entre ledit miroir à réflexion partielle et ledit miroir réfléchissant recouvre un trajet de faisceau entre ledit miroir à réflexion totale et ledit miroir réfléchissant.

8. Un dispositif oscillant de laser semi-conducteur du type à plaque selon la revendication 7, dans lequel ledit faisceau laser subit de manière répétée des réflexions totales dans ledit milieu laser du type à plaque, et dans lequel ledit trajet optique effectue un parcours en zigzag dans une seconde section perpendiculaire à ladite première section.

9. Un dispositif oscillant de laser semi-conducteur du type à plaque selon la revendication 7 ou 8, dans lequel ladite première face d'extrémité et l'autre face d'extrémité dudit milieu laser du type à plaque sont inclinées d'un angle satisfaisant approximativement la condition de Brewster dans ladite seconde section.

10. Un dispositif oscillant de laser semi-conducteur du type à plaque selon une quelconque des revendications 1 à 9, dans lequel ledit milieu laser du type à plaque comprend un cristal laser YAG dopé avec du Nd.

## FIG. 1a

## FIG. 1b

EP 0 831 567 B1

F I G. 2

EP 0 831 567 B1

F I G. 3

FIG. 4a

FIG. 4b

EP 0 831 567 B1